# NEW EUROPEAN PATENT SPECIFICATION

(11) **EP 3 401 269 B2**
(45) Date of publication and mention of the opposition decision: **02.08.2023**
(45) Mention of the grant of the patent: 16.10.2019
(21) Application number: 18170299.4
(22) Date of filing: 02.05.2018
(51) Int. Cl.: B66C 23/68, B66C 23/62, B66C 23/00

(54) **A CRANE SYSTEM**
KRANSYSTEM
SYSTÈME DE GRUE

(30) Priority: 08.05.2017 SE 1750562
(43) Date of publication of application: 14.11.2018
(73) Proprietor: Hiab AB, 164 22 Kista (SE)
(72) Inventor: TÖRNBLOM, Leif, 824 91 Hudiksvall (SE)
(74) Representative: Nordic Patent Service A/S

(56) References cited:
- WO-A1-2006/062458
- JP-U- S57 121 338

## Description

### Technical field

The present disclosure relates to a crane system, and in particular a crane system that comprises a crane and a crane platform to be mounted at a vehicle.

### Background

Working vehicles are often provided with various movable cranes, which are attached to the vehicle via a joint. These cranes comprise movable crane parts, e.g. booms, that may be extended, and that are joined together by joints such that the crane parts may be folded together at the vehicle and extended to reach e.g. a load. Various tools, e.g. buckets, hooks or forks, may be attached to the crane tip, often via a rotator. Document WO 2006/062458 A1 discloses such a crane mounted on a vehicle.

If for example a bucket is to be used during loading and unloading it often needs to be transported by the truck together with the transported material. During transportation the bucket is normally placed at the loading space of the vehicle.

When transporting sand, waste material, or other loose material on a loading space on a truck the material must often be covered. In that case it may not be possible to place the bucket at the loading space, e.g. because the bucket may damage the cover.

An object of the present invention is to achieve an improved crane system that facilitates bringing a working tool, e.g. a bucket, at the truck during transportation that eliminates the above drawbacks with the presently used technique. Another object is that transportation of the working tool is performed such that available space at the vehicle is effectively used, and also in a practical and safe manner.

### Summary

The above-mentioned object is achieved by the present invention according to the independent claim.

Preferred embodiments are set forth in the dependent claims.

According to one aspect a crane system is provided comprising a crane and a crane platform to be mounted at a vehicle. The crane platform comprises a crane connector to connect a base end of the crane to the crane connector such that the crane is pivotal in relation to the crane platform. The crane is a foldable type crane and comprises at least two booms connected to each other by joints. The crane is structured to be in a parked state, in which state the crane is folded and arranged in a compact, space-saving, position at the crane platform, and having no working tool attached to a crane tip. The crane platform has an elongated shape along a longitudinal axis A1 and is structured to be mounted at the vehicle essentially in a horizontal orientation, and that the longitudinal axis A1 of the crane platform, when mounted at the vehicle, is essentially perpendicular to a longitudinal axis A2 of the vehicle. The crane platform further comprises a tool holder, and that the tool holder and the crane connector are arranged essentially along the longitudinal axis A1 of the crane platform, and that the tool holder is provided with support and hold members configured to support and firmly hold a working tool in a parked position in the tool holder when the working tool is not in use. The working tool is structured to be connected to the crane tip by a tool exchanger provided at the crane tip, and that the support and hold members are structured to hold the working tool in its parked position such that it is connectable to the crane tip by the tool exchanger. The support and hold members are provided with locking means to lock the working tool in the parked position, and to unlock the tool such that the tool may be lifted from the tool holder. This feature further improves the safety of the crane system. The locking means comprises a rod-like structure configured to be inserted into at least one recess in the working tool, the rod-like structure being moved by activation of a solenoid or a step-motor; or the locking means comprises hydraulically movable plates configured to move to a locking position where they apply pressure towards the working tool.

According to one embodiment the tool holder is mounted on the crane platform such that the working tool may be inserted into the tool holder and removed from the tool holder by, respectively, applying essentially vertically directed downward and upward movements to the working tool. This is advantageous in that the tool holder then safely holds the working tool in its intended parked position.

According to still another embodiment, when the working tool is in its parked position and the crane is in its parked state, the working tool and the folded crane essentially are within an outer extension of the crane platform when seen from above. This is advantageous in order to achieve a compact crane system.

According to a further embodiment the crane system comprises a control unit provided with a set of crane control procedures and configured to generate control signals including control instructions adapted to control the crane.
The set of crane control procedures comprises various automatic and semi-automatic control procedures to be applied when using the crane, and wherein the control procedures in particular comprises steps to be performed starting with the crane in the parked state and involve controlling the crane movements to position the crane tip in a position where the tool exchanger is in a position to attach the working tool to the crane tip. By providing automatic control procedures the movement may be optimized and also a fast and safe procedure may be achieved.
According to another embodiment the set of crane control procedures comprises a control procedure including instructions to control lifting the working tool from the tool holder. This further improves the user-friendliness of the crane system.
In another embodiment the set of crane control procedures comprises a control procedure including instructions to control, before lifting the tool, a locking means to be in an unlocked state in order to unlock the working tool from the tool holder. This is advantageous in order to provide fast procedures and at the same time improve the safety.
In still a further embodiment the set of crane control procedures comprises control procedures to be applied when a working task is performed. These control procedures include instructions to control movements of the crane such that the working tool is safely parked in the tool holder and released from the tool exchanger, and that the crane is then moved to its parked state.

In one preferred embodiment the working tool is a bucket, e.g. a clamshell bucket. In still another embodiment the crane platform has a length along its longitudinal axis that essentially corresponds to the width of the vehicle where it is to be mounted, and wherein the crane platform is structured to be arranged between a driver's cabin and a loading area, or behind the loading area. A space-saving placement of the crane platform is thereby achieved.

One object of the crane system according to the present invention is to be able, in a quick and easy way, to fold a crane including a working tool, e.g. a clamshell bucket, so that the load on a tipper truck can be covered. The main use will be for cranes on a truck in applications where loosely material like sand or waste is transported and the load must be covered. The basis of the invention is to use the place on a crane platform where the operator platform now is located for having the bucket placed when the crane is in a folded position. Thus, according to the present invention a crane platform for the crane is provided with a tool holder. According to the present invention advantageous control procedure is included to be implemented for crane movements often performed, e.g. move from passive parked position for the crane, e.g. during driving, to an active position where crane including a working tool is ready to start working. This procedure should preferably be performed automatically in response of only one command.

### Brief description of the drawings

Figure 1 shows a schematic illustration of a vehicle provided with a crane system according to the present invention.
Figure 2 shows a side-view of a crane platform that schematically illustrates the crane platform according to one embodiment according to the present invention.
Figure 3 shows a view from a direction perpendicular to the view of figure 2 that schematically illustrates one embodiment of the present invention.
Figure 4 shows the same view as figure 3 schematically illustrating the embodiment in another state compared to figure 3.
Figure 5 is a schematic illustration from above of a vehicle provided with a crane platform according to the present invention.
Figure 6 shows the crane platform according to one embodiment of the present invention from a direction perpendicular to the longitudinal axis A1.
Figure 7 shows a side-view of the crane platform illustrated in figure 6.

### Detailed description

The crane system will now be described in detail with references to the appended figures. Throughout the figures the same, or similar, items have the same reference signs. Moreover, the items and the figures are not necessarily to scale, emphasis instead being placed upon illustrating the principles of the invention.

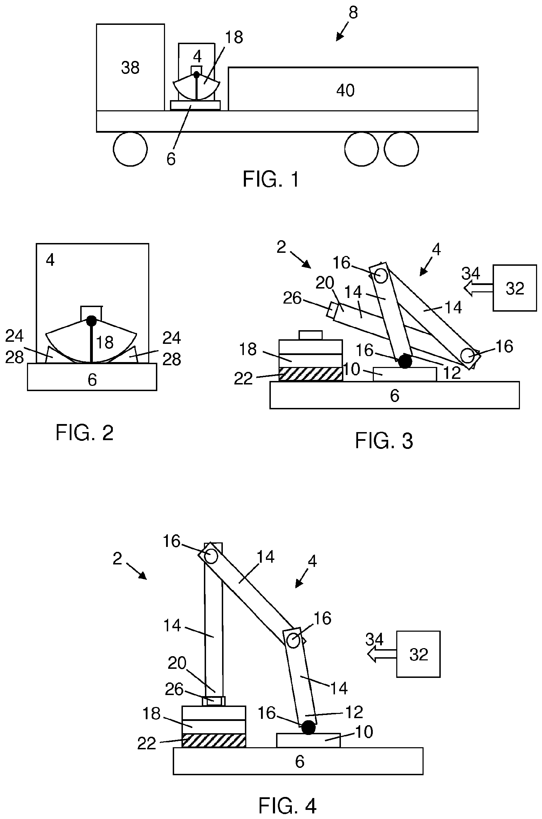

With references to figures 1-5 a crane system 2, is provided, comprising a crane 4 and a crane platform 6 to be mounted at a vehicle 8. The vehicle 8 is a working vehicle 8 preferably provided with a loading area 40.

The crane platform 6 comprises a crane connector 10 to connect a base end 12 of the crane 4 to the crane connector 10 such that the crane 4 is pivotal in relation to the crane platform 6. The crane 4 is a foldable type crane and comprises at least two booms 14, which may be extendible, connected to each other by joints 16.

The crane 4 is structured to be in a parked state, in which state the crane 4 is folded and arranged in a compact, space-saving, position at the crane platform 6, and having no working tool 18 attached to a crane tip 20. Figures 1-3 and 5-6 illustrate the crane in the parked state.

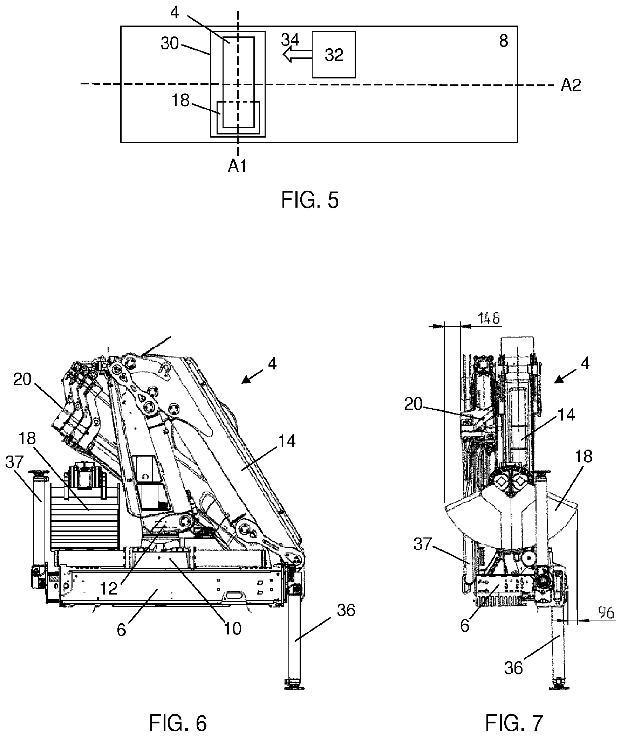

The crane platform 6 has an elongated shape defining a longitudinal axis A1 and is structured to be mounted at the vehicle 8 essentially in a horizontal orientation, and that the longitudinal axis A1 of the crane platform 6, when mounted at the vehicle, is essentially perpendicular, when seen from above, to a longitudinal axis A2 of the vehicle 8; this is schematically illustrated in figure 5.

The crane platform 6 further comprises a tool holder 22.

The tool holder 22 and the crane connector 10 are arranged essentially along the longitudinal axis A1 of the crane platform 6.
The tool holder 22 is provided with support and hold members 24 configured to support and firmly hold a working tool 18 in a parked position in the tool holder 22 when the working tool 18 is not in use. The working tool 18 is structured to be connected to the crane tip 20 by a tool exchanger 26 provided at the crane tip 20. The tool exchanger may e.g. be a commonly applied rotator. Figure 4 is an illustration of the crane platform in a connecting state, i.e. in a state when the crane has been unfolded and moved such that the tool exchanger 26 may be connected to the working tool 18.

Preferably, the working tool 18 is a bucket, e.g. a clamshell bucket, which is illustrated in the figures. However, the tool holder may be structured to hold and support any working tool that may be connected to, and used by, the crane, e.g. a hook or a fork.

The support and hold members 24 are structured to hold the working tool 18 in its parked position such that it is connectable to the crane tip 20 by the tool exchanger 26. In figure 2 the support and hold members 24 are illustrated as a pair of wedges adapted to the outer shape of the working tool and arranged essentially below the working tool. Naturally, the support and hold members may have other configurations. As an example, they may instead be designed as two vertical walls arranged at a distance to each other that corresponds to the width of the working tool.

According to one embodiment the tool holder 22 is mounted on the crane platform 6 such that the working tool 18 may be inserted into the tool holder 22 and removed from the tool holder 22 by applying essentially vertically directed downward and upward movements, respectively, to the working tool 18 by controlling movements of the crane.

The support and hold members 24 are provided with locking means 28 structured to lock the working tool 18 in the parked position, and also to unlock the tool 18 such that the tool may be lifted from the tool holder 22. Thereby the working tool is safely locked to the crane platform, which in particular is important when the vehicle moves. The locking means 28 may be an integral part of the support and hold members 24, but may also be a separate part. The locking of the working tool 18 may be achieved in one of two different ways. The locking means 28 either has a rod-like structure which is movable to be inserted into at least one recess provided in the working tool to mechanically hold the working tool in place, the rod-like structure being moved by activation of a solenoid or a step-motor, or alternatively the locking means comprises hydraulically movable plates that are controlled to move to a locking position where they apply pressure towards the working tool.

Advantageously, when the working tool 18 is in its parked position and the crane 4 is in its parked state, the working tool 18 and the folded crane essentially are within an outer extension 30 of the crane platform 6 when seen from above. This is schematically illustrated in figure 5.

According to another embodiment the crane system 2 comprises a control unit 32 provided with a set of crane control procedures. The control unit is configured to generate control signals 34 including control instructions adapted to control the crane 4. The control unit may be similar to a commonly applied control unit, e.g. a hand-held control unit, provided with the necessary processing capabilities and memory means to perform the control of the crane.
More specifically, the control instructions are control signals applied to all various systems, e.g. hydraulic systems, required to control movements of the crane. More particularly, the control instructions are adapted to control movements of the crane, extensions of any extendible booms, and also to control the working tool when attached to the crane tip via the tool exchanger.

The set of crane control procedures comprises various automatic and semi-automatic control procedures to be applied when using the crane. In particular, the control procedures comprises steps to be performed starting with the crane in the parked state and involve controlling the crane movements to position the crane tip 20 in a position where the tool exchanger 26 is in a position to attach the working tool 18 to the crane tip 20.

In a further embodiment, the set of crane control procedures comprises a control procedure including instructions to control lifting the working tool 18 from the tool holder 22.

In another embodiment, the set of crane control procedures comprises a control procedure including instructions to control, before lifting the tool 18, a locking means 36 to be in an unlocked state in order to unlock the working tool 18 from the tool holder 22.

Preferably, the set of crane control procedures comprises control procedures to be applied when a working task is performed. These control procedures include instructions to control movements of the crane 4 such that the working tool 18 is safely parked in the tool holder 22 and released from the tool exchanger 26, and the crane 4 is then moved to its parked state.

The control unit is configured to receive operator commands, e.g. via a joystick or buttons. Each of these operator commands have an assigned crane control procedure of the set of crane control procedures, and the commands may include "position crane tip in position to connect tool exchanger to working tool", "lift tool from tool holder", "move crane with working tool to a working position", "move crane to position where to disconnect and park working tool in tool holder".

By applying these crane control procedures various parts of, or the entire, crane movement, and tasks to be performed by the crane, may be programmed in advance and then automatically, or semi-automatically, be performed.

Preferably, the crane platform 6 has a length along its longitudinal axis A1 that essentially corresponds to the width of the vehicle where it is to be mounted. The crane platform 6 is structured to be arranged between a driver's cabin 38 and a loading area 40, which is illustrated in figure 1. Alternatively, the crane platform is structured to be arranged behind the loading area 40.

Figure 6 is a view perpendicular to the longitudinal axis A1 of the crane platform 6 provided with a crane 4 illustrating one embodiment of the present invention. Figure 7 is a view of the crane platform 6 shown in figure 6 along the longitudinal axis A1. Preferably, the crane platform is provided with stabilizer legs 36, 37, one at each end of the platform, i.e. at each side of the vehicle. These are used to support the crane and the vehicle during lifting procedures. In figure 6 the right stabilizer leg 36 is in its active position where it is extended downwards to support the crane platform to the ground. The left stabilizer leg 37 is in a non-active position.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A crane system (2) comprising a crane (4) and a crane platform (6) to be mounted at a vehicle (8), the crane platform (6) comprises a crane connector (10) to connect a base end (12) of the crane (4) to the crane connector (10) such that the crane (4) is pivotal in relation to the crane platform (6), the crane (4) is a foldable type crane and comprises at least two booms (14) connected to each other by joints (16), the crane platform (6) has an elongated shape along a longitudinal axis (A1) and is structured to be mounted at the vehicle (8) essentially in a horizontal orientation, and that the longitudinal axis (A1) of the crane platform (6), when mounted at the vehicle, is essentially perpendicular to a longitudinal axis (A2) of the vehicle (8),
the crane (4) being structured to be in a parked state, in which state the crane (4) is folded and arranged in a compact, space-saving, position at the crane platform (6), and having no working tool (18) attached to a crane tip (20),
the crane platform (6) further comprising a tool holder (22) and that the tool holder (22) and the crane connector (10) are arranged essentially along the longitudinal axis (A1) of the crane platform (6), and that said tool holder (22) is provided with support and hold members (24) configured to support and firmly hold a working tool (18) in a parked position in said tool holder (22) when the working tool (18) is not in use, the working tool (18) is structured to be connected to said crane tip (20) by a tool exchanger (26) provided at said crane tip (20), wherein said support and hold members (24) are structured to hold said working tool (18) in its parked position such that it is connectable to said crane tip (20) by said tool exchanger (26),
wherein the support and hold members (24) are provided with locking means (28) to lock the working tool (18) in the parked position, and to unlock the tool (18) such that the tool may be lifted from the tool holder (22),
**characterized in that**
said locking means comprises a rod-like structure configured to be inserted into at least one recess in said working tool, said rod-like structure being moved by activation of a solenoid or a step-motor; or
said locking means comprises hydraulically movable plates configured to move to a locking position where they apply pressure towards said working tool.

2. The crane system (2) according to claim 1, wherein the tool holder (22) is mounted on the crane platform (6) such that the working tool (18) may be inserted into the tool holder (22) and removed from the tool holder (22) by, respectively, applying essentially vertically directed downward and upward movements to the working tool (18).

3. The crane system (2) according to claims 1 or 2, wherein when said working tool (18) is in its parked position and said crane (4) is in its parked state, the working tool (18) and the folded crane essentially are within an outer extension (30) of said crane platform (6) when seen from above.

4. The crane system (2) according to any of claims 1-3, comprising a control unit (32) provided with a set of crane control procedures and configured to generate control signals (34) including control instructions adapted to control said crane (4), wherein said set of crane control procedures comprises various automatic and semi-automatic control procedures to be applied when using the crane, and wherein the control procedures comprises steps to be performed starting with the crane in the parked state and involve controlling the crane movements to position the crane tip (20) in a position where said tool exchanger (26) is in a position to attach the working tool (18) to the crane tip (20).

5. The crane system (2) according to claim 4, wherein the set of crane control procedures comprises a control procedure including instructions to control lifting the working tool (18) from the tool holder (22).

6. The crane system (2) according to claim 4 or 5, wherein the set of crane control procedures comprises a control procedure including instructions to control, before lifting the tool (18), the locking means (28) to be in an unlocked state in order to unlock the working tool (18) from the tool holder (22).

7. The crane system (2) according to any of claims 4-6, wherein the set of crane control procedures comprises control procedures to be applied when a working task is performed, these control procedures including instructions to control movements of the crane (4) such that the working tool (18) is safely parked in the tool holder (22) and released from the tool exchanger (26), and the crane (4) is then moved to its parked state.

8. The crane system (2) according to any of claims 1-7, wherein said working tool (18) is a bucket, e.g. a clamshell bucket.

9. The crane system (2) according to any of claims 1-8, wherein the crane platform (6) having a length along its longitudinal axis that essentially corresponds to the width of the vehicle where it is to be mounted, and wherein the crane platform (6) is structured to be arranged between a driver's cabin (38) and a loading area (40), or behind the loading area (40).

## Patentansprüche

1. Krananlage (2), umfassend einen Kran (4) und eine Kranbühne (6), die an einem Fahrzeug (8) befestigt werden soll, wobei die Kranbühne (6) einen Krananschluss (10) umfasst, um ein Basisende (12) des Krans (4) derart mit dem Krananschluss (10) zu verbinden, dass der Kran (4) in Bezug auf die Kranbühne (6) schwenkbar ist, wobei der Kran (4) ein Faltkran ist und mindestens zwei Ausleger (14) umfasst, die durch Gelenke (16) miteinander verbunden sind, wobei die Kranbühne (6) eine längliche Form entlang einer Längsachse (A1) aufweist und dafür konstruiert ist, in einer im Wesentlichen horizontalen Ausrichtung an dem Fahrzeug (8) befestigt zu werden, und wobei die Längsachse (A1) der Kranbühne (6), wenn sie an dem Fahrzeug befestigt ist, im Wesentlichen senkrecht zu einer Längsachse (A2) des Fahrzeugs (8) ist,
wobei der Kran (4) dafür konstruiert ist, sich in einem Parkzustand zu befinden, wobei der Kran (4) in diesem Zustand zusammengefaltet ist und in einer kompakten, platzsparenden Stellung an der Kranbühne (6) angeordnet ist und kein an einer Kranspitze (20) angebrachtes Arbeitswerkzeug (18) aufweist,
wobei die Kranbühne (6) ferner eine Werkzeughalterung (22) umfasst, und wobei die Werkzeughalterung (22) und der Krananschluss (10) im Wesentlichen entlang der Längsachse (A1) der Kranbühne (6) angeordnet sind, und wobei die Werkzeughalterung (22) mit Stütz- und Halteelementen (24) bereitgestellt ist, die dafür ausgelegt sind, ein Arbeitswerkzeug (18) in einer Parkstellung in der Werkzeughalterung (22) zu stützen und festzuhalten, wenn sich das Arbeitswerkzeug (18) nicht im Gebrauch befindet, wobei das Arbeitswerkzeug (18) dafür konstruiert ist, durch einen Werkzeugwechsler (26), der an der Kranspitze (20) bereitgestellt ist, mit der Kranspitze (20) verbunden zu werden, wobei die Stütz- und Halteelemente (24) dafür konstruiert sind, das Arbeitswerkzeug (18) derart in seiner Parkstellung zu halten, dass es durch den Werkzeugwechsler (26) mit der Kranspitze (20) verbindbar ist,
wobei die Stütz- und Halteelemente (24) mit Verriegelungsmitteln (28) bereitgestellt sind, um das Arbeitswerkzeug (18) in der Parkstellung zu verriegeln und das Werkzeug (18) derart zu entriegeln, dass das Werkzeug aus der Werkzeughalterung (22) gehoben werden kann,
**gekennzeichnet dadurch, dass**
die Verriegelungsmittel eine stangenähnliche Struktur umfassen, die dafür ausgelegt ist, in mindestens eine Ausnehmung in dem Arbeitswerkzeug eingesetzt zu werden, wobei die stangenähnliche Struktur durch Aktivierung eines Solenoids oder eines Stufenmotors bewegt wird; oder
die Verriegelungsmittel hydraulisch bewegbare Platten umfassen, die dafür ausgelegt sind, sich in eine Verriegelungsstellung zu bewegen, in der sie Druck in Richtung des Arbeitswerkzeugs ausüben.

2. Krananlage (2) nach Anspruch 1, wobei die Werkzeughalterung (22) derart auf der Kranbühne (6) befestigt ist, dass das Arbeitswerkzeug (18), durch jeweiliges Anwenden von im Wesentlichen vertikal nach unten und nach oben gerichteten Bewegungen auf das Arbeitswerkzeug (18), in die Werkzeughalterung (22) eingesetzt und aus der Werkzeughalterung (22) entfernt werden kann.

3. Krananlage (2) nach Anspruch 1 oder 2, wobei, wenn sich das Arbeitswerkzeug (18) in seiner Parkstellung befindet und sich der Kran (4) in seinem Parkzustand befindet, das Arbeitswerkzeug (18) und der zusammengefaltete Kran, wenn von oben aus betrachtet, sich im Wesentlichen innerhalb einer Außenabmessung (30) der Kranbühne (6) befinden.

4. Krananlage (2) nach einem der Ansprüche 1-3, umfassend eine Steuereinheit (32), die mit einem Satz von Kransteuerverfahren bereitgestellt ist und dafür ausgelegt ist, Steuersignale (34) zu erzeugen, die Steueranweisungen beinhalten, die dazu eingerichtet sind, den Kran (4) zu steuern, wobei der Satz von Kransteuerverfahren verschiedene automatische und halbautomatische Steuerverfahren umfasst, die bei Verwendung des Krans angewendet werden sollen, und wobei die Steuerverfahren Schritte umfassen, die beginnend mit dem Kran im Parkzustand durchgeführt werden sollen und ein Steuern der Kranbewegungen beinhalten, um die Kranspitze (20) in einer Stellung zu positionieren, in der sich der Werkzeugwechsler (26) in einer Stellung zum Anbringen des Arbeitswerkzeugs (18) an der Kranspitze (20) befindet.

5. Krananlage (2) nach Anspruch 4, wobei der Satz von Kransteuerverfahren ein Steuerverfahren umfasst, das Anweisungen beinhaltet, um ein Heben des Arbeitswerkzeugs (18) aus der Werkzeughalterung (22) zu steuern.

6. Krananlage (2) nach Anspruch 4 oder 5, wobei der Satz von Kransteuerverfahren ein Steuerverfahren umfasst, das Anweisungen beinhaltet, um die Verriegelungsmittel (28), vor dem Heben des Werkzeugs (18), so zu steuern, dass sie sich in einem entriegelten Zustand befinden, um das Arbeitswerkzeug (18) aus der Werkzeughalterung (22) zu entriegeln.

7. Krananlage (2) nach einem der Ansprüche 4-6, wobei der Satz von Kransteuerverfahren Steuerverfahren umfasst, die angewendet werden sollen, wenn eine Arbeitsaufgabe durchgeführt wird, wobei diese Steuerverfahren Anweisungen beinhalten, um Bewegungen des Krans (4) derart zu steuern, dass das Arbeitswerkzeug (18) sicher in der Werkzeughalterung (22) geparkt wird und aus dem Werkzeugwechsler (26) freigeben wird, und der Kran (4) anschließend in seinen Parkzustand bewegt wird.

8. Krananlage (2) nach einem der Ansprüche 1-7, wobei das Arbeitswerkzeug (18) eine Schaufel, z. B. eine Greiferschaufel, ist.

9. Krananlage (2) nach einem der Ansprüche 1-8, wobei die Kranbühne (6) eine Länge entlang ihrer Längsachse aufweist, die im Wesentlichen der Breite des Fahrzeugs entspricht, an dem sie befestigt werden soll, und wobei die Kranbühne (6) dafür konstruiert ist, zwischen einer Fahrerkabine (38) und einer Ladefläche (40) oder hinter der Ladefläche (40) angeordnet zu werden.

## Revendications

1. Système de grue (2) comprenant une grue (4) et une plateforme de grue (6) destinée à être montée sur un véhicule (8), la plateforme de grue (6) comprend un raccord de grue (10) destiné à raccorder une extrémité de base (12) de la grue (4) au raccord de grue (10) de telle façon que la grue (4) peut pivoter par rapport à la plateforme de grue (6), la grue (4) est une grue de type pliable et comprend au moins deux flèches (14) reliées l'une à l'autre par des joints (16), la plateforme de grue (6) présente une forme allongée le long d'un axe longitudinal (A1) et est structurée pour être montée sur le véhicule (8) essentiellement dans une orientation horizontale, et l'axe longitudinal (A1) de la plateforme de grue (6) est essentiellement perpendiculaire à un axe longitudinal (A2) du véhicule (8) lorsqu'elle est montée sur le véhicule,
la grue (4) étant structurée pour être dans un état de stationnement, dans lequel la grue (4) est pliée et disposée dans une position compacte peu encombrante sur la plateforme de grue (6), et ne comportant pas d'outils de travail (18) fixé à une extrémité de grue (20),
la plateforme de grue (6) comprenant en outre un support d'outil (22) et le support d'outil (22) et le raccord de grue (10) sont disposés essentiellement le long de l'axe longitudinal (A1) de la plateforme de grue (6), et ledit support d'outil (22) est doté d'éléments de support et de maintien (24) configurés pour supporter et maintenir fermement un outil de travail (18) dans une position de stationnement dans ledit support d'outil (22) lorsque l'outil de travail (18) n'est pas utilisé, l'outil de travail (18) est structuré pour être relié à ladite extrémité de grue (20) par le biais d'un échangeur d'outil (26) disposé à ladite extrémité de grue (20), dans lequel lesdits éléments de support et de maintien (24) sont structurés pour maintenir ledit outil de travail (18) dans sa position de stationnement de telle façon qu'il peut être relié à ladite extrémité de grue (20) par le biais dudit échangeur d'outil (26),
dans lequel les éléments de support et de maintien (24) sont dotés d'un moyen de verrouillage (28) destiné à verrouiller l'outil de travail (18) dans la position de stationnement, et à déverrouiller l'outil (18) de manière à ce que l'outil puisse être soulevé par rapport au support d'outil (22),
**caractérisé en ce que**
ledit moyen de verrouillage comprend une structure du genre tige configurée pour être insérée dans au moins une cavité dans ledit outil de travail, ladite structure du genre tige étant déplacée par activation d'un solénoïde ou d'un moteur pas-à-pas ; ou
ledit moyen de verrouillage comprend des plaques déplaçables de façon hydraulique configurées pour se déplacer vers une position de verrouillage dans laquelle elles appliquent une pression vers ledit outil de travail.

2. Système de grue (2) selon la revendication 1, dans lequel le support d'outil (22) est monté sur la plateforme de grue (6) de telle façon que l'outil de travail (18) peut être inséré dans le support d'outil (22) et retiré du support d'outil (22), en appliquant respectivement des déplacements dirigés essentiellement verticalement vers le bas et vers le haut à l'outil de travail (18).

3. Système de grue (2) selon les revendications 1 ou 2, dans lequel, lorsque ledit outil de travail (18) est dans sa position de stationnement et que ladite grue (4) est dans son état de stationnement, l'outil de travail (18) et la grue pliée se trouvent essentiellement dans une extension extérieure (30) de ladite plateforme de grue (6), vues d'au-dessus.

4. Système de grue (2) selon l'une quelconque des revendications 1 à 3, comprenant une unité de commande (32) dotée d'un ensemble de procédures de commande de grue et configurée pour générer des signaux de commande (34) incluant des instruction de commande adaptées pour commander ladite grue (4), dans lequel ledit ensemble de procédures de commande de grue comprend diverses procédures de commande automatique et semi-automatique destinées à être appliquées pendant l'utilisation de la grue, et dans lequel les procédures de commande comprennent des étapes à exécuter à commencer par la grue dans l'état de stationnement et impliquent la commande des déplacements de grue pour le positionnement de l'extrémité de grue (20) dans une position dans laquelle ledit échangeur d'outil (26) est dans une position permettant de fixer l'outil de travail (18) à l'extrémité de grue (20).

5. Système de grue (2) selon la revendication 4, dans lequel l'ensemble de procédures de commande de grue comprend une procédure de commande incluant des instructions destinées à commander le soulèvement de l'outil de travail (18) par rapport au support d'outil (22) .

6. Système de grue (2) selon la revendication 4 ou 5, dans lequel l'ensemble de procédures de commande de grue comprend une procédure de commande incluant des instructions destinées à commander, avant le soulèvement de l'outil (18), le moyen de verrouillage (28) de manière à le mettre dans un état déverrouillé afin de déverrouiller l'outil de travail (18) par rapport au support d'outil (22).

7. Système de grue (2) selon l'une quelconque des revendications 4 à 6, dans lequel l'ensemble de procédures de commande de grue comprend des procédures de commande destinées à être appliquées lors de l'exécution d'une tâche de travail, ces procédures de commande incluant des instructions destinées à commander les déplacements de la grue (4) de telle façon que l'outil de travail (18) est rangé en toute sécurité dans le support d'outil (22) et libéré de l'échangeur d'outil (26), et la grue (4) est ensuite déplacée vers son état de stationnement.

8. Système de grue (2) selon l'une quelconque des revendications 1 à 7, dans lequel ledit outil de travail (18) est une benne, par exemple une benne preneuse.

9. Système de grue (2) selon l'une quelconque des revendications 1 à 8, dans lequel la plateforme de grue (6) présente une longueur le long de son axe longitudinal, laquelle correspond essentiellement à la largeur du véhicule sur lequel elle est destinée à être montée, et dans lequel la plateforme de grue (6) est structurée pour être disposée entre une cabine de conducteur (38) et une zone de chargement (40), ou derrière la zone de chargement (40).
